# EUROPEAN PATENT APPLICATION

(11) **EP 4 464 164 A1**
(43) Date of publication of application: **20.11.2024**
(21) Application number: 23174404.6
(22) Date of filing: 19.05.2023
(51) Int. Cl.: A23F 3/14, A23F 3/30, A23F 3/34, A23F 5/10, A23F 5/12, A23F 3/06, A23F 3/32

(54) **SHAPED EXTRACTABLE COMPOSITION**

(71) Applicant: Local Tea, Global Impact BV, 4881 ME Zundert (NL)
(72) Inventor: MEESTERS, GABRIEL MARINUS HENRICUS, 2614 TJ DELFT (NL)
(74) Representative: Van den Berg, Frans Richard

(57) **Abstract**

The invention pertains to a shaped extractable composition comprising extractable plant material and a thickening binder.

## Description

The present invention relates to shaped extractable compositions.

Extractable composition such as tea have been widely used for centuries. Tea is generally provided in tea bags with a string. The tea bags are permeable to hot water to allow extraction of flavouring and colouring agents and prepare a tea. Such tea bags also serve to maintain the tea in the bag so that free tea leaves or tea leave parts are not dispersed in the extraction liquid. Such tea bags or parts thereof are not always biodegradable and/or compostable. Moreover, to render tea bags biodegradable by using paper it will require large quantities of paper, which is undesirable.

Alternatively, extractable tea compositions can also be pre-shaped, e.g. a cake, spheres or a disc-like shape. Such pre-shaped tea compositions are generally prepared by applying sufficient pressure to the tea leaves or tea leave parts in a mold. Upon extraction of tea from these pre-shaped tea compositions these compositions will fall apart and separate tea leaves and tea leave clusters will disperse in the extraction liquid.

The objective of the present invention is to provide a novel shaped extractable composition.

The invention pertains to a shaped extractable composition comprising extractable plant material and a thickening binder. The shaped extractable composition of the invention is capable of releasing flavours from the extractable plant material without the need for a sachet to maintain the plant material. The thickening binder is capable of adhering well to and binding the plant material and create a shaped form that will maintain its shape during extraction, e.g. in hot water. The thickening binder generally does not significantly dissolve during the extraction process and moreover generally does not or not considerably alter the flavour of the liquid comprising the extract from the plant material. As indicated, the thickening binder prevents the shaped extractable composition from disintegration during the extraction process, for example when kept in hot water of 80°C for 2 to 5 minutes. This also allows for multiple extractions of the shaped extractable composition and/or easy dosing of the extracts in the drink. In addition, the thickening binder may be a natural binder, which allows for the entire inventive composition to be compostable after use and/or to be biodegradable. The inventive composition may contain only natural ingredients and does not require synthetic ingredients, such as conventional thickening polymers originating from fossil fuel. The inventive extractable composition generally extracts the extractable components slower than in conventional sachets only containing the plant material; however, the same concentration of the flavours in the liquid can be obtained. Moreover, the extractable plant material is generally less oxidized in the shaped composition, rendering an improved preservation of prebiotics and flavouring agents present in the plant material.

The shaped extractable composition of the invention can have any shape known in the art as long as the shape is maintained during extraction in e.g. hot water. With the term "extractable" is meant that ingredients of the plant material such as flavours can be extracted from the plant material and released into the extraction liquid. Examples of such shapes include coins, stars, hearts and rings. It is also envisaged to pierce the shaped composition thereby creating small holes in the shaped composition. Such piercing generally increase the extraction speed and/or dissolution rate of he extractable ingredients of the plant material. The number of holes created can be chosen as desired. Also the diameter of the holes created can be chosen as desired, preferably the hole diameter is at least a factor 10 times smaller than the smallest side of the shaped material. The invention further envisages holes of different shapes including circular, square and star shapes for instance.

In one embodiment of the invention, the composition of the invention maintains its shape for at least 2 minutes in water having a temperature of 80°C. Preferably, the inventive composition maintains its shape for at least 4 minutes in water having a temperature of 80°C, more preferably at least 5 minutes in water having a temperature of 80°C and most preferably at least 5 minutes in water having a temperature of 80°C. With the wording "maintaining or maintains its shape" is meant that the original shape of the inventive composition before extraction is maintained during extraction, and that no or hardly any plant material is released individually into the extraction liquid. With "original shape" is meant that the shaped composition maintains its shape before extraction, which may be swollen due to the uptake of liquid. The wording "hardly any material is released individually in the extraction liquid" means that the shaped composition may release some plant material, generally small particles of the plant material, and the total amount of released plant material is at most 5 wt%, based on the total weight of the shaped extractable composition before extraction, preferably at most 2 wt% of released plant material, more preferably at most 1 wt% and most preferably at most 0.5 wt% of released plant material, based on the total weight of the shaped extractable composition before extraction. The skilled person should generally be able to remove the inventive shaped composition from the extraction liquid in its entirety without leaving or by leaving a small amount of any pieces of plant material or part of the shaped composition behind in the extraction liquid.

Alternatively or additionally, the composition of the invention maintains its shape for at least 2 minutes in water having a temperature of 60°C. Preferably, the inventive composition maintains its shape for at least 4 minutes in water having a temperature of 60°C, more preferably at least 5 minutes in water having a temperature of 60°C and most preferably at least 5 minutes in water having a temperature of 60°C.

Alternatively or additionally, the composition of the invention maintains its shape for at least 2 minutes in water having a temperature of 90°C. Preferably, the inventive composition maintains its shape for at least 4 minutes in water having a temperature of 90°C, more preferably at least 5 minutes in water having a temperature of 90°C and most preferably at least 5 minutes in water having a temperature of 90°C.

The shaped extractable composition comprises extractable plant material. The extractable plant material can be any extractable plant material known in the art. Examples of such extractable plants includes tea such green, white and black tea; (ground) coffee such as arabica, robusta and decaffeinated coffee, cocoa originating from for example Forastero, Trinitario or Criollo species; flowers such as jasmine, rose, osmanthus and chrysanthenum; fruits such as berries, strawberry, citrus and peach; other plant material used for extraction such as rooibos, nettle, ginger, chamomile, herbs or spices, and combinations of two or more of these extractable plants.

The extractable plant material can be present in the shaped composition of the invention in any form or shape known in the art. This form or shape of the plant material includes leaves, part of leaves, (ground) powder, dried or fresh parts, and flower petals or part of flower petals.

In one embodiment, the shaped composition of the invention comprises at least 60 wt% of extractable plant material, based on the total weight of the shaped extractable composition. Preferably, the inventive composition comprises at least 70 wt% extractable plant material, more preferably at least 70 wt% extractable plant material, even more preferably at least 80 wt% extractable plant material and most preferably at least 90 wt% extractable plant material, and preferably at most 99.5 wt% extractable plant material, more preferably at most 99 wt% extractable plant material and most preferably at most 98 wt% extractable plant material, based on the total weight of the shaped extractable composition.

The shaped extractable composition of the invention further comprises a thickening binder. The thickening binder serves to bind the extractable plant material so that a pre-shaped extractable composition can be formed. Preferably, the extractable plant material is not covered completely by the thickening binder. In this way, the plant material is more exposed to the extraction liquid allowing faster extraction or dissolution of the flavouring agents in the plant material. It is further preferred that the thickening binder does not or does hardly dissolve in the extracting liquid and does not add significant taste or flavour to the extraction liquid; when the thickening binder is partially dissolved in the extraction liquid it does not add any flavouring. Preferably, the thickening binder does not dissolve in the extraction liquid during the extraction time. The thickening binder can be any thickening binder known in the art and suitable for use in shaped extractable compositions of the invention. Preferably, the thickening binder is a synthetic or natural thickening binder. Most preferably, the thickening binder is a natural thickening binder. In one embodiment, the thickening binder is a polysaccharide. Examples of such natural thickening binders include pectin, carrageenan, alginates such as calcium alginate, guar gum, xanthan gum, carboxymethyl cellulose, gum Arabic, (thickening) proteins and locust bean gum, and combinations of two or more of these thickening binders. It is contemplated that a thickening binder can be formed using two or more precursors. Such a precursor can be a polysaccharide such as sodium alginate combined with a divalent or trivalent metal salt such as a calcium salt, a magnesium salt or an iron(III) salt, preferably a calcium salt. By combining these two precursors a gel is generally instantaneously formed.

In one embodiment, the thickening binder is a gel. Preferably, the thickener is a gel at 20°C and a concentration of 1 wt% in water. Typically, for a gel the storage modulus G' is larger than the loss modulus G". The measurement of G' and G" is performed using conventional rheological measurement techniques.

In one embodiment, the thickening binder has a viscosity of at least 5,000 cP in an aqueous solution (1 wt%) at 20°C. Preferably, the thickening binder has a viscosity of at least 8,000 cP in an 1 wt% aqueous solution at 20°C, more preferably at least 10,000 cP and most preferably at least 12,000 cP. This viscosity is a Brookfield viscosity and can be measured using conventional techniques.

In one embodiment, the thickening binder has a solubility in water at 60°C of at most 1 g/L. Preferably, the solubility of the thickening binder in water at 60°C is at most 0.8 g/L, more preferably at most 0.5 g/L, even more preferably at most 0.3 g/L and most preferably at most 0.1 g/L, and preferably at least 0.001 g/L, more preferably at least 0.005 g/L, and most preferably at least 0.01 g/L. The solubility can be determined using conventional techniques.

In one embodiment, the thickening binder has a solubility in water at 80°C of at most 1 g/L. Preferably, the solubility of the thickening binder in water at 80°C is at most 0.8 g/L, more preferably at most 0.5 g/L, even more preferably at most 0.3 g/L and most preferably at most 0.1 g/L, and preferably at least 0.001 g/L, more preferably at least 0.005 g/L, and most preferably at least 0.01 g/L.

In yet another embodiment, at most 5 wt% of the thickening binder, based on the total weight of the thickening binder, is dissolved in water at 60°C within an extraction time of 3 minutes. Preferably, at most 1 wt% of the thickening binder, based on the total weight of the thickening binder, is dissolved in water at 60°C within an extraction time of 3 minutes, even more preferably at most 0.5 wt% of the thickening binder, even more preferably at most 0.1 wt% of the thickening binder and most preferably at most 0.05 wt% of the thickening binder, and preferably at least 0.0001 wt% of the thickening binder, more preferably at least 0.0005 wt% of the thickening binder and most preferably at least 0.001 wt% of the thickening binder, based on the total weight of the thickening binder.

In yet another embodiment, at most 5 wt% of the thickening binder, based on the total weight of the thickening binder, is dissolved in water at 80°C within an extraction time of 3 minutes. Preferably, at most 1 wt% of the thickening binder, based on the total weight of the thickening binder, is dissolved in water at 80°C within an extraction time of 3 minutes, even more preferably at most 0.5 wt% of the thickening binder, even more preferably at most 0.1 wt% of the thickening binder and most preferably at most 0.05 wt% of the thickening binder, and preferably at least 0.0001 wt% of the thickening binder, more preferably at least 0.0005 wt% of the thickening binder and most preferably at least 0.001 wt% of the thickening binder, based on the total weight of the thickening binder.

In one embodiment, the shaped composition of the invention comprises at least 0.1 wt% of the thickening binder, based on the total weight of the shaped extractable composition. Preferably, the inventive composition comprises at least 0.2 wt% of the thickening binder, more preferably at least 0.3 wt% of the thickening binder, even more preferably at least 0.4 wt% of the thickening binder and most preferably at least 0.5 wt% of the thickening binder, and preferably at most 20 wt% of the thickening binder, more preferably at most 10 wt% of the thickening binder and most preferably at most 5 wt% of the thickening binder, based on the total weight of the shaped extractable composition.

In one embodiment, the shaped extractable composition comprises additives that can be suitably used in such compositions. Examples of such additives include synthetic flavouring agents, natural flavouring agents, synthetic colouring agents, natural colouring agents, synthetic fragrances and natural fragrances. Preferably, the additive is natural.

In one embodiment, the shaped composition of the invention comprises at least 0.01 wt% of the additive, based on the total weight of the shaped extractable composition. Preferably, the inventive composition comprises at least 0.1 wt% of the additive, more preferably at least 0.5 wt% of the additive, even more preferably at least 1 wt% of the additive and most preferably at least 2 wt% of the additive, and preferably at most 20 wt% of the additive, more preferably at most 15 wt% of the additive and most preferably at most 10 wt% of the additive, based on the total weight of the shaped extractable composition.

In one embodiment, the shaped extractable of the invention comprises at most 10 wt% water, based on the total weight of the shaped extractable composition. Preferably, the inventive composition comprises at most 9 wt% water, more preferably at most 7 wt% water, even more preferably at most 6 wt% water and most preferably at most 5 wt% water, and preferably at least 0.1 wt% water, more preferably at least 1 wt% water and most preferably at least 2 wt% water, based on the total weight of the shaped extractable composition. The microbial load of the shaped composition will be low with these low amounts of water and due to the low water activity. The amount of water or moisture in the inventive shaped composition can be determined using conventional techniques.

The remaining part of the shaped extractable composition may be comprised of other components commonly used in such extractable compositions such as sugar and milk. With the extractable plant material, thickening binder, additive, and water, the other components add up to 100 wt% of the total weight of the shaped extractable composition.

In one embodiment, the shaped extractable composition further comprises a string. The string is on one side connected to the shaped composition, and serves to introduce the shaped extractable composition into the extraction liquid and/or to remove the inventive composition from the extraction liquid. The string may comprise of any material known in the art and suitable for use as a string. Preferably, the string is made from a biodegradable material, e.g. cotton or other plant-based material.

The invention further pertains to a method of producing a shaped extractable composition according to the invention comprising the steps of:
(a) providing a first aqueous solution of the thickening binder and/or a first precursor;
(b) optionally providing a second aqueous solution of a second precursor;
(c) contacting the first aqueous solution with extractable plant material to obtain a slurry or paste;
(d) optionally contacting the second aqueous solution with the slurry or paste and/or the first aqueous solution;
(e) removing water from the slurry or paste and shape the extractable composition; and
(f) drying the shaped extractable composition.

With the method of the invention the shaped extractable composition of the invention comprising the extractable plant material and thickening binder can be prepared in a simple and sustainable way. In step (a) of the inventive method, a first aqueous solution of the thickening binder and/or the first precursor is provided. The thickening binder and/or the first precursor in the first aqueous solution is present in an amount of at most 20 % by weight (wt%), based on the total weight of the aqueous solution. The thickening binder can be any thickening binder indicated above. The first precursor in itself cannot form a thickening binder according to the invention, but in combination with a second precursor forms a thickening binder according to the invention. Examples of a first precursor and a second precursor include sodium alginate and calcium chloride, and xanthan gum and carrageenan. Preferably, the thickening binder and/or the first precursor is present in an amount of at most 15 wt%, more preferably at most 10 wt%, even more preferably at most 8 wt% and most preferably at most 5 wt%, and preferably at least 0.01 wt%, more preferably at least 0.05 wt%, even more preferably at least 0.1 wt% and most preferably at least 0.2 wt%, based on the total weight of the first aqueous solution.

The temperature of the first aqueous solution in step (a) is maintained at a temperature above 0°C. Preferably, the temperature of the first aqueous solution is at least 10°C, more preferably at least 15°C, more preferably at least 20°C and most preferably at least 25°C, and preferably at most 60°C, more preferably at most 50°C, and most preferably at most 40°C. The temperature is chosen such that the dissolution rate of the thickening binder and/or the first precursor is relatively high, and the viscosity of the first aqueous solution is relatively low, allowing the aqueous solution to be more easily processed further, such as its use in step (c) of the inventive method.

When in step (a) a first precursor is used, a second aqueous solution comprising the second precursor is to be prepared according to step (b). In one embodiment, the second precursor is present in an amount of at most 15 wt%, more preferably at most 10 wt%, even more preferably at most 8 wt% and most preferably at most 5 wt%, and preferably at least 0.01 wt%, more preferably at least 0.05 wt%, even more preferably at least 0.1 wt% and most preferably at least 0.2 wt%, based on the total weight of the second aqueous solution.

In one embodiment, the weight ratio of the first and the second precursor is at least 0.1, preferably at least 0.5 and preferably at least 1, and preferably at most 100, more preferably at most 50 and most preferably at most 10.

The temperature of the second aqueous solution in step (a) is maintained at a temperature above 0°C. Preferably, the temperature of the second aqueous solution is at least 10°C, more preferably at least 15°C, more preferably at least 20°C and most preferably at least 25°C, and preferably at most 60°C, more preferably at most 50°C, and most preferably at most 40°C. It is envisaged that the temperatures of the first and second aqueous solutions are the same or different. Preferably, the temperatures of the first and second aqueous solutions are the same. In one emobodiment, the temperature of the first and second solution should be chosen such that no or hardly any extraction of the extractable plant material occurs.

In step (c) of the inventive method, the first aqueous solution is contacted with the extractable plant material to form a slurry or a paste. The weight ratio of the first aqueous solution and the extractable plant material is at least 0.1, preferably at least 0.5 and most preferably at least 1, and preferably at most 100, more preferably at most 50, even more preferably at least 20 and most preferably at least 10. When the amount of the first aqueous solution is too high the thickening binder and/or the first precursor will not be effectively used and/or significant loss of thickening binder and/or first precursor may occur rendering the inventive method less attractive commercially and less sustainable. When the amount of the first aqueous solution is insufficient, the thickening binder and/or first precursor cannot bind the plant material to form the inventive shaped composition which form can be maintained upon extraction.

Alternatively or additionally, The weight ratio of the thickening binder and/or first precursor and the extractable plant material is at least 0.1, preferably at least 0.5 and most preferably at least 1, and preferably at most 20, more preferably at most 10, even more preferably at least 8 and most preferably at least 5.

The temperature in step (c) is maintained at a temperature above 0°C. Preferably, the temperature in step (c) is at least 10°C, more preferably at least 15°C, more preferably at least 20°C and most preferably at least 25°C, and preferably at most 60°C, more preferably at most 50°C, and most preferably at most 40°C.

In step (d) of the inventive method, the second aqueous solution is contacted with the slurry or paste and/or the first aqueous solution. In one embodiment, the second aqueous solution is mixed with the first aqueous solution in step (a) before contacting the resulting solution with the plant material. Alternatively, the second aqueous solution is contacted with the plant material after the plant material and the first aqueous solution have been contacted. It is also envisaged that part of the second aqueous solution is added to the first aqueous solution before contacting the resulting solution to the plant material and the remainder of the second aqueous solution is added to the slurry or paste of the plant material.

The temperature in step (d) is maintained at a temperature above 0°C. Preferably, the temperature in step (d) is at least 0°C, more preferably at least 10°C, more preferably at least 15°C, even more preferably at least 20°C and most preferably at least 25°C, and preferably at most 60°C, more preferably at most 50°C, and most preferably at most 40°C. In one embodiment, the temperature in step (d) is chosen to be lower than the temperature used in any one of steps (a) to (d). At lower temperature the thickening binder has a higher viscosity, and allows for immobilization of the thickening binder and/or the extractable plant material, which in turn enables the shaping of the extractable composition of the invention.

In step (e) of the inventive method, water is removed from the slurry or paste. In this way, the resulting paste or solid can be shaped, which shaping is also performed in this step. In one embodiment, water can be removed through compression of the slurry or paste and allowing the liquid to be removed from the composition. Alternatively or additionally, water can be removed through evaporation. Preferably, the amount of water is at least 10 wt%, based on the total weight of the extractable composition, more preferably at least 15 wt%, even more preferably at least 20 wt% and most preferably at least 25 wt%, and preferably at most 60 wt%, more preferably at most 50 wt% and most preferably at most 40 wt%, based on the total weight of the extractable composition.

The temperature in step (e) is maintained at a temperature above 0°C. Preferably, the temperature in step (e) is at least 10°C, more preferably at least 15°C, more preferably at least 20°C and most preferably at least 25°C, and preferably at most 60°C, more preferably at most 50°C, and most preferably at most 40°C.

In step (e) the water removal and the shaping can be performed simultaneously or consecutively. When performed simultaneously, the compression of the composition is performed in a mold with a desired shape. When performed consecutively, water is first removed from the composition to obtain a composition which can be shaped and does not disintegrate or fall apart, which composition can subsequently be shaped as desired, for example using a pre-shaped mold.

In step (f) of the inventive method, the shaped extractable composition is dried. The drying of the composition can be performed using any drying method known in the art. Preferably, the drying is performed using heat and/or air (circulation). The temperature in step (f) is maintained at a temperature above room temperature. Preferably, the temperature in step (f) is at least 25°C, more preferably at least 30°C, more preferably at least 35°C and most preferably at least 40°C, and preferably at most 80°C, more preferably at most 75°C, and most preferably at most 70°C. The temperature at which the inventive composition is dried should not be too high as the plant material may deteriorate and/or cause the formation of off-flavours.

In one embodiment, the drying is carried out until the water amount is less than 10 wt%, based on the total weight of the shaped extractable composition. Preferably, the inventive composition comprises at most 9 wt% water, more preferably at most 7 wt% water, even more preferably at most 6 wt% water and most preferably at most 5 wt% water, and preferably at least 0.1 wt% water, more preferably at least 1 wt% water and most preferably at least 2 wt% water, based on the total weight of the shaped extractable composition.

The invention is exemplified in the following Examples.

### Examples

### Examples 1 to 3: shaped tea composition with calcium alginate as binder

In 20 ml of water 0.1 g sodium alginate was dissolved at room temperature to obtain a 0.5 wt% first aqueous solution. In 20 mL of water 0.1 g CaCl₂ was dissolved to obtain a 0.5 wt% second aqueous solution.

10 mL of the first aqueous solution was mixed with 3 g of black tea. The soaked tea leaves were introduced into a syringe. The plunger was introduced on top of the soaked tea leaves and pushed to compress the tea leaves. The plunger was removed and on top of the compressed soaked tea leaves the second aqueous solution was dripped onto the soaked tea leaves until the solution was no longer absorbed in the tea leaves. The coin-shaped tea composition was removed from the syringe and maintained in the second aqueous solution for 5 minutes. The coin-shaped tea composition was subsequently dried in an oven at 57°C for 16 hours to obtain the composition of Example 1.

This procedure was repeated with second aqueous solutions comprising 1.0 wt% (Example 2) and 1.5 wt% CaCl₂ (Example 3).

All three coin-shaped tea compositions of Examples 1 to 3 were added to hot water having a temperature of 70°C and maintained in the liquid for 1, 2, 3 and 4 minutes. From all three coin-shaped tea compositions of Examples 1 to 3 flavouring and colouring agents were extracted. Measurements with UV VIS on the extraction liquid revealed that the same components (similar UV VIS spectrum) are extracted as from fresh tea leaves. The absorbance of the compositions of Examples 1 to 3 is lower than for fresh tea leaves indicating that the dissolution rate of the extractable components in tea is lower in the compositions of Examples 1 to 3.

The shape of the compositions of Examples 1 to 3 did not significantly change after 2 minutes of extraction. At 4 minutes of extraction the shaped composition of Example 1 became larger in size while the composition of Example 3 remained its original shape. In addition, the colour of the shaped compositions of Examples 1 to 3 did not change after 4 minutes of extraction.

### Examples 4 and 5: shaped tea composition with guar gum as binder

In 20 ml of water 0.2 g guar gum was dissolved at 40°C to obtain a 1.0 wt% first aqueous solution after which it was cooled to room temperature.

20 mL of the first aqueous solution was mixed with 24 g of black tea. The soaked tea leaves were introduced into a syringe. The plunger was introduced on top of the soaked tea leaves and pushed to compress the tea leaves. The coin-shaped tea composition was removed from the syringe. The coin-shaped tea composition was subsequently dried in an air blowing oven at 50°C for 18 minutes to obtain the composition of Example 4.

This experiment was repeated except that drying was conducted in a microwave (360 W for 6 minutes) to obtain a composition of Example 5.

The coin-shaped tea compositions of Examples 4 and 5 were added to hot water having a temperature of 80°C and maintained in the liquid for 2 and 4 minutes. The tea compositions of Examples 4 and 5 showed good extraction properties and a coloured tea. No off flavours caused by guar gum were observed. The integrity of the coin-shaped tea compositions of Examples 4 and 5 remained intact after 4 minutes of extraction. In addition, the colour of the shaped compositions of Examples 4 and 5 did not change after 4 minutes of extraction.

### Example 6: shaped tea/dried fruit composition with calcium alginate as binder

In 20 ml of water 0.2 g sodium alginate was dissolved at room temperature to obtain a 1.0 wt% first aqueous solution. In 20 mL of water 0.3 g CaCl₂ was dissolved to obtain a 1.5 wt% second aqueous solution. 6 mL of the first aqueous solution was mixed with 2 g of tea mélange (mix of green tea and dried fruit parts). The soaked tea leaves were introduced into a syringe. The plunger was introduced on top of the soaked tea leaves and pushed to compress the tea leaves. The plunger was removed and on top of the compressed soaked tea leaves the second aqueous solution was dripped onto the soaked tea leaves until the solution was no longer absorbed in the tea leaves. The coin-shaped tea composition was removed from the syringe and maintained in the second aqueous solution for 5 minutes. The coin-shaped tea composition was subsequently dried in an oven at 57°C for 16 hours to obtain the composition of Example 6.

The coin-shaped tea composition of Example 6 was added to hot water having a temperature of 80°C and maintained in the liquid for 1, 5 and 10 minutes. The tea composition of Example 6 showed good extraction properties and a coloured tea. No off flavours caused by calcium alginate were observed. The integrity of the coin-shaped tea composition of Example 6 remained intact after 5 minutes of extraction. In addition, the colour of the shaped composition of Example 6 did not change after 5 minutes of extraction.

### Example 7: shaped green tea /rooibos/ ginger composition with calcium alginate as binder

In 20 ml of water 0.2 g sodium alginate was dissolved at room temperature to obtain a 1.0 wt% first aqueous solution. In 20 mL of water 0.3 g CaCl₂ was dissolved to obtain a 1.5 wt% second aqueous solution. 6 mL of the first aqueous solution was mixed with 2 g of tea melange (mix of green tea, rooibos and ginger (20/10/70)). The soaked tea leaves were introduced into a syringe. The plunger was introduced on top of the soaked tea leaves and pushed to compress the tea leaves. The plunger was removed and on top of the compressed soaked tea leaves the second aqueous solution was dripped onto the soaked tea leaves until the solution was no longer absorbed in the tea leaves. The coin-shaped tea composition was removed from the syringe and maintained in the second aqueous solution for 5 minutes. The coin-shaped tea composition was subsequently dried in an oven at 57°C for 16 hours to obtain the composition of Example 7.

The coin-shaped tea composition of Example 7 was added to hot water having a temperature of 80°C and maintained in the liquid for 2, 5 and 10 minutes. The tea compositionsof Example 7 showed good extraction properties and a coloured tea. No off flavours caused by calcium alginate were observed. The integrity of the coin-shaped tea composition of Example 7 remained intact even after 10 minutes of extraction. In addition, the colour of the shaped composition of Example 7 did not change after 10 minutes of extraction.

### Example 8: shaped green tea /chamomile composition with calcium alginate as binder

In 20 ml of water 0.2 g sodium alginate was dissolved at room temperature to obtain a 1.0 wt% first aqueous solution. In 20 mL of water 0.3 g CaCl₂ was dissolved to obtain a 1.5 wt% second aqueous solution.

6 mL of the first aqueous solution was mixed with 2 g of tea melange (mix of tea/fruit mix used in Example 6 and chamomile (25/75)). The soaked tea leaves were introduced into a syringe. The plunger was introduced on top of the soaked tea leaves and pushed to compress the tea leaves. The plunger was removed and on top of the compressed soaked tea leaves the second aqueous solution was dripped onto the soaked tea leaves until the solution was no longer absorbed in the tea leaves. The coin-shaped tea composition was removed from the syringe and maintained in the second aqueous solution for 5 minutes. The coin-shaped tea composition was subsequently dried in an oven at 57°C for 16 hours to obtain the composition of Example 8.

The coin-shaped tea composition of Example 8 was added to hot water having a temperature of 80°C and maintained in the liquid for 2, 5 and 10 minutes. The tea composition of Example 8 showed good extraction properties and a coloured tea. No off flavours caused by calcium alginate were observed. The integrity of the coin-shaped tea composition of Example 8 remained intact even after 10 minutes of extraction. In addition, the colour of the shaped composition of Example 8 did not change after 5 minutes of extraction. The coin-shaped tea composition of Example 8 released some small-sized parts, which was less than 0.5 wt% of the composition (measured after filtering and drying) even after 10-minute extraction.

### Example 9: shaped tea/dried fruit composition with calcium alginate as binder

In 20 ml of water 0.02 g sodium alginate was dissolved at room temperature to obtain a 0.1 wt% first aqueous solution. In 20 mL of water 0.3 g CaCl₂ was dissolved to obtain a 1.5 wt% second aqueous solution.

6 mL of the first aqueous solution was mixed with 2 g of tea mélange (mix of green tea and dried fruit parts as used in Example 6). The soaked tea leaves were introduced into a syringe. The plunger was introduced on top of the soaked tea leaves and pushed to compress the tea leaves. The plunger was removed and on top of the compressed soaked tea leaves the second aqueous solution was dripped onto the soaked tea leaves until the solution was no longer absorbed in the tea leaves. The coin-shaped tea composition was removed from the syringe and maintained in the second aqueous solution for 5 minutes. The coin-shaped tea composition was subsequently dried in an oven at 57°C for 16 hours to obtain the composition of Example 9.

The coin-shaped tea composition of Example 9 was added to hot water having a temperature of 80°C and maintained in the liquid for 1, 5 and 10 minutes. The tea composition of Example 9 showed good extraction properties and a coloured tea, which was darker than the tea obtained in Example 6 at the same extraction times. No off flavours caused by calcium alginate were observed. The integrity of the coin-shaped tea composition of Example 9 remained intact after 5 minutes of extraction. In addition, the colour of the shaped composition of Example 9 did not change after 10 minutes of extraction.

### Example 10: shaped tea/dried fruit composition with calcium alginate as binder

In 20 ml of water 0.1 g sodium alginate was dissolved at room temperature to obtain a 0.5 wt% first aqueous solution. In 20 mL of water 0.3 g CaCl₂ was dissolved to obtain a 1.5 wt% second aqueous solution.

6 mL of the first aqueous solution was mixed with 2 g of tea mélange (mix of green tea and dried fruit parts as used in Example 6). The soaked tea leaves were introduced into a syringe.

The plunger was introduced on top of the soaked tea leaves and pushed to compress the tea leaves. The plunger was removed and on top of the compressed soaked tea leaves the second aqueous solution was dripped onto the soaked tea leaves until the solution was no longer absorbed in the tea leaves. The coin-shaped tea composition was removed from the syringe and maintained in the second aqueous solution for 5 minutes. The coin-shaped tea composition was subsequently dried in an oven at 57°C for 16 hours to obtain the composition of Example 10.

The coin-shaped tea composition of Example 10 was added to hot water having a temperature of 80°C and maintained in the liquid for 1, 5 and 10 minutes. The tea composition of Example 10 showed good extraction properties and a coloured tea, which was darker than the tea obtained in Example 6 at the same extraction times. No off flavours caused by calcium alginate were observed. The integrity of the coin-shaped tea composition of Example 10 remained intact after 5 minutes of extraction. In addition, the colour of the shaped composition of Example 10 did not change after 10 minutes of extraction.

### Example 11: shaped coffee composition with calcium alginate as binder

In 20 ml of water 0.2 g sodium alginate was dissolved at room temperature to obtain a 1.0 wt% first aqueous solution. In 20 mL of water 0.3 g CaCl₂ was dissolved to obtain a 1.5 wt% second aqueous solution.

6 mL of the first aqueous solution was mixed with 2 g of ground coffee beans (Arabica). The soaked ground coffee was introduced into a syringe. The plunger was introduced on top of the soaked ground coffee and pushed to compress the ground coffee. The plunger was removed and on top of the compressed soaked ground coffee the second aqueous solution was dripped onto the soaked coffee until the solution was no longer absorbed in the ground coffee. The coin-shaped coffee composition was removed from the syringe and maintained in the second aqueous solution for 5 minutes. The coin-shaped coffee composition was subsequently dried in an oven at 57°C for 16 hours to obtain the composition of Example 11.

The coin-shaped coffee composition of Example 11 was added to hot water having a temperature of 80°C and maintained in the liquid for 1, 5 and 10 minutes. The coffee composition of Example 11 showed good extraction properties and a coloured coffee. No off flavours caused by calcium alginate were observed. The integrity of the coin-shaped coffee composition of Example 11 remained intact after 10 minutes of extraction. In addition, the colour of the shaped composition of Example 11 did not change after 10 minutes of extraction.

## Claims

1. A shaped extractable composition comprising extractable plant material and a thickening binder.

2. Composition according to claim 1 wherein the thickening binder has a viscosity above 5000 cP in a 1 wt% water solution at 20°C.

3. Composition according to any one of claims 1 and 2 wherein the thickening binder is a gel.

4. Composition according to any one of claims 1 to 3 wherein the thickening binder comprises a polysaccharide.

5. Composition according to any one of the preceding claims wherein the thickening binder comprises a polysaccharide selected from a group consisting of guar, xanthan, carboxymethyl cellulose, and calcium alginate.

6. Composition according to any one of the preceding claims wherein the composition maintains its shape for at least 2 minutes in water having a temperature of 80°C.

7. Composition according to any one of the preceding claims wherein the composition comprises at most 10 wt% water, based on the total weight of the shaped extractable composition.

8. Composition according to any one of the preceding claims wherein the extractable plant material is tea.

9. Method of producing a shaped extractable composition comprising extractable plant material and a thickening binder comprising the steps of:
(a) providing a first aqueous solution of the thickening binder and/or a first precursor;
(b) optionally providing a second aqueous solution of a second precursor;
(c) contacting the first aqueous solution with extractable plant material to obtain a slurry or paste;
(d) optionally contacting the second aqueous solution with the slurry or paste and/or the first aqueous solution;
(e) removing water from the slurry or paste and shape the extractable composition; and
(f) drying the shaped extractable composition.
